(19) Europäisches Patentamt

European Patent Office

Office européen des brevets

(11) Veröffentlichungsnummer : **0 140 213**
**B1**

(12) **EUROPÄISCHE PATENTSCHRIFT**

(45) Veröffentlichungstag der Patentschrift :
20.01.88

(21) Anmeldenummer : 84111967.0

(22) Anmeldetag : 05.10.84

(51) Int. Cl.⁴ : $G\ 01\ G\ 11/14$, $G\ 01\ G\ 11/00$, $G\ 01\ F\ 1/76$

(54) Verfahren und Vorrichtung zur Erfassung des Durchsatzes eines Schüttgutstromes.

(30) Priorität : 06.10.83 CH 5437/83
30.11.83 DE 3343349

(43) Veröffentlichungstag der Anmeldung :
08.05.85 Patentblatt 85/19

(45) Bekanntmachung des Hinweises auf die Patenterteilung : 20.01.88 Patentblatt 88/03

(84) Benannte Vertragsstaaten :
AT BE CH DE FR GB IT LI SE

(56) Entgegenhaltungen :
DE-A- 3 227 875
DE-C- 960 132
FR-A- 2 303 272
GB-A- 2 113 856
TECHNISCHES MESSEN, Band 47, Nr. 4, April 1980, Seiten 137-140, München, DE; TH. ALBERTZ: "Massenstrommessung in Stäuben"

(73) Patentinhaber : Gebrüder Bühler AG

CH-9240 Uzwil (CH)

(72) Erfinder : Gmuer, Bruno
Boppartstrasse 12
CH-9014 St. Gallen (CH)

(74) Vertreter : EGLI-EUROPEAN PATENT ATTORNEYS
Widenmayerstrasse 5
D-8000 München 22 (DE)

## Beschreibung

### Technisches Gebiet

Die Erfindung bezieht sich auf ein Verfahren zur Erfassung des Durchsatzes eines Schüttgutstromes, der einer Waage zugeführt wird, deren Ausgang wiederholt gesperrt und freigegeben wird, sowie auf eine Vorrichtung zur Durchführung eines solchen Verfahrens.

### Zugrundeliegender Stand der Technik

In der Praxis stellt sich häufig bei Verarbeitungsbetrieben die Notwendigkeit, den Durchsatz eines Schüttgutstromes in einer Transportleitung aus unterschiedlichen Gründen zu erfassen. So kann z. B. das Erfordernis bestehen, über eine bestimmte Verarbeitungszeit hinweg die genaue durchgeflossene Schüttgutmenge zu erfassen, oder auch den Schüttgutstrom im Hinblick auf einen genauen zeitlichen Durchsatz zu steuern. Hierfür sind bislang im wesentlichen Schüttwaagen und Bandwaagen zur Verfügung gestanden. Wenn es sich um rein innerbetriebliche Vorgänge handelte, so wurden vielfach keine all zu großen Anforderungen an die Qualität der Messungen gestellt. Allerdings ist meistens zu fordern, daß der Schüttgutstrom möglichst nicht oder nicht während längerer Zeit wegen der Messung unterbrochen werden soll. Besonders im Bereich von Mühlenanlagen wurden gerade in neuerer Zeit in größerer Stückzahl Impulsmeßgeräte eingesetzt, wie sie z. B. aus der DE-C-2 609 167 oder aus der DE-C-2 342 668 (Offenlegungstag 7, 3, 74) bekannt sind.

Ein auf eine konventionelle Waage herabfallender Schüttgutstrom ergibt zunächst keinen für die Vermessung sogleich brauchbaren Meßwert, da es ohne spezielle Einrichtungen nicht möglich ist, den von der Waage erfaßten Impulsanteil des fallenden Schüttgutstromes, der auch über der Zeit gesehen Schwankungen unterworfen ist, exakt von dem bereits auf der Waage befindlichen Gewichtsanteil der Schüttgutmasse zu trennen. Bei den bekannten Verfahren zur Messung des Durchsatzes mittels Impulsmeßgeräten wird der senkrecht herabfallende Schüttgutstrom abgelenkt. Durch die Umlenkung ergibt sich eine horizontale Kraftkomponente, die proportional der jeweils augenblicklich auf die Ablenkplatte herabfallenden Schüttgutmenge ist, weshalb die Messung dieser Kraftkomponente einen Rückschluß auf den Durchsatz des Schüttgutes zuläßt. Mit einem solchen Meßsignal kann dann der Schüttgutdurchsatz über entsprechend gekoppelte Dosiergeräte auf einen gewünschten Wert eingestellt werden. Der Vorteil dieses bekannten Meßverfahrens ist darin zu sehen, daß der kontinuierliche Fluß des Schüttgutstromes auch durch die Messung nicht unterbrochen wird und der Produktfluß so, wie er auf das Meßgerät auffällt, weitergegeben werden kann. Zusätzlich sind die Herstellkosten solcher Impulsmeßgeräte gegenüber denen bisheriger Waagensysteme, etwa der Chargen- oder Bandwaagen, wesentlich geringer. Die Impulsmeßverfahren haben aber den Nachteil, daß ihre Genauigkeit jedoch nicht all zu groß ist. Einflußfaktoren wie Luft-, oder Materialfeuchtigkeit, Temperatur usw. können dabei meßtechnisch kaum eliminiert werden, so daß in der Praxis mit Meßwertstoleranzen in einem Bereich von $\pm 1 \%$ gerechnet werden muss. Bei extremen Schwankungen des Reibverhaltens zwischen Produkt und Ablenkplatte kann die Fehlanzeige sogar mehr als 1 % betragen.

Das Bestreben, möglichst auch in größeren Mühlen den Schüttguttransport durch elektronische Rechner zu steuern und zu überwachen, läßt allerdings die Verwendung von Meßwerten mit solchen Fehlertoleranzen nicht mehr zu. So entspricht bei einer Mühle mit einer Tagesleistung von z. B. 500 t eine Fehlanzeige im Bereich von 1 % einem reellen Schüttgutfehler von insgesamt 5 t, was die Möglichkeit einer Rechnersteuerung einer solchen Mühle völlig in Frage stellen müßte.

In der DE-A-960 132 ist ein Verfahren zur Durchsatzmessung eines Schüttgutstromes beschrieben, bei dem das herabfallende Schüttgut aus der Förderleitung in einen Bypass umgelenkt und dort in eine innerhalb eines Rohrquerschnittes angeordnete Waage eingeleitet wird. Die Waage weist einen verklappbaren Boden auf, der zunächst den Querschnitt des Waagenbehälters nach unten hin verschließt, so daß das herabfallende Produkt auf dem Boden aufgestapelt wird. Die Umlenkklappe, die das Schüttgut aus der Haupt- in die Bypassleitung der Waage umlenkt, ist mit einem Zeitwerk derart gekoppelt, daß nach einer bestimmten vorgegebenen Zeit die Einleitung des Produktes in den Bypass wieder aufgehoben und die Hauptleitung freigegeben wird. Die Waage ist mit einer Vorrichtung zur Anzeigung des eingespeisten Gewichtes verbunden, so daß die Bedienungsperson von dieser ablesen kann, welche Schüttgutmenge innerhalb des bekannten und vorgegebenen Zeitintervalls in den Verwägebehälter eingeleitet wurde, woraus sich dann auch unmittelbar der Durchsatz in der Haupttransportleitung ergibt. Anschließend kann mechanisch der Boden der Waagen wieder geöffnet, das darin enthaltene Produkt ausgelassen, der Boden erneut geschlossen und dann der Vorgang wiederholt werden. Dieses vorbekannte Verfahren ist zwar grundsätzlich geeignet, Messwerte zu liefern, die einen Rückschluss auf den Produktdurchsatz zulassen, es weist jedoch einige wesentliche Nachteile auf. So ist zunächst für die Durchführung der Wägung eine Unterbrechung des Schüttgutzulaufs auf die Waage nötig (Umschaltung von Zulauf auf Freigabe der Hauptleitung), was grundsätzlich unerwünscht ist. Des weiteren ist das bekannte Verfahren auch sehr langsam, da es von einem mechanischen Wägesystem Gebrauch macht, das seinerseits mit relativ langen Verwägezeiten arbeiten muss, die vom Taktspiel der mechanischen Schieber zum Ein- bzw. Ausleiten des Hauptstromes abhängig sind, was alles mit einer relativ langen Taktzeit des gesamten Vorgangs verbunden ist, deren Dauer nicht mehr abgesenkt werden kann. Hinzu kommt auch eine unzureichende Wägegenauigkeit, da das Wägebehälter-Tara-Gewicht als Störgrösse nicht ausreichend berücksichtigt wird. Haftet etwa Produkt am Wägebehälter bereits zu Beginn des Waagevorgangs an, so ergibt sich ein variables Anfangsgewicht, das nicht vernachlässigt werden kann, dessen Variabilität aber bei der Ermittlung des Verwägungswertes unberücksichtigt bleibt. Auch dieser Stand der Technik ist nicht geeignet, dass man aus ihm abgeleitete Messwerte für die Computersteuerung einer gesamten grösseren Mühlenanlage einsetzen könnte, etwa für das exakte Mischen von verschiedenen Produktqualitäten oder über die Produktmengen, Arbeitsabläufe zu steuern.

Offenbarung der Erfindung

Ausgehend hiervon liegt der Erfindung die Aufgabe zugrunde, ein Verfahren für die Bestimmung des Produktdurchsatzes zu finden, das eine Bestimmung des Produktdurchsatzes mit einer Genauigkeit von weniger als ± 2‰ ermöglicht und auch bei ununterbrochener Produktzuführung einsetzbar ist, durch das somit die Genauigkeit von Industriewaagen erreicht wird, so dass auch für eine computergesteuerte Produktfluss-Ueberwachung eine ausreichende Genauigkeit der ermittelten Messwerte gegeben ist ; dabei soll aber dennoch gleichzeitig der Aufwand besonders gering gehalten werden.

Erfindungsgemäss wird diese Aufgabe bei einem Verfahren der eingangs genannten Art dadurch gelöst, dass bei ununterbrochen zufliessendem Produkt von der Waage mindestens zwei Messwerte gebildet werden, die nach Sperren des Waagenausgangs um einen kurzen Referenzzeitabschnitt zueinander versetzt an der Waage abgenommen und elektronisch erfasst werden, wobei der Referenzzeitabschnitt mindestens um die Beruhigungsdauer des Waagenausganges nachgeschaltet, insgesamt in dem Bereich des ungestörten Messwertanstieges der Waage liegend gewählt und aus den Messwerten eine Verhältniszahl für die Gewichtszunahme pro Zeiteinheit (d. h. für den Durchsatz, z. Bsp. ṁ) des Schüttgutes innerhalb eines Wägespieles errechnet wird.

Das erfindungsgemässe Verfahren vermeidet gesonderte Ermittlung des Impulses, somit auch die Probleme, die bei bisherigen auf Auswertung des Impulses beruhenden Messsystemen auftreten und mit den Nachteilen einer Messsignalbeeinflussung durch unterschiedliches Reibverhalten, Auftreten von Randeinflüssen (wie Temperatur- und Feuchtigkeitsänderungen) verbunden sind und dies auch noch bei variierenden Produkten. Die bei solchen bekannten Meßsystemen als Preis für die Aufrechterhaltung eines kontinuierlichen Produktstromes mittels Impulsmessung in Kauf genommene Meßungenauigkeit ist beim erfindungsgemäßen Verfahren so weit überwunden, daß hier — wie ansonsten bei geeichten Industriewaagen — eine Meßgenauigkeit von ± 2‰, regelmässig sogar ± 1‰ unschwer erreicht wird. Es ist zwar bei den ebenfalls bekannten Behälterwaagen der Impuls des fallenden Produktes schon ausgeschaltet und die Möglichkeit zu einer größeren Genauigkeit als bei reiner Impulsmessung gegeben ; allerdings benötigt man dort entsprechende Wartezeiten bzw. einen Vorbunker, um den Produktstrom während dieser Wartezeiten aufzunehmen, was ebenfalls beim erfindungsgemäßen Verfahren vollständig vermieden ist. Beim Verfahren nach der Erfindung muß auch nicht, wie etwa noch bei dem Verfahren aus der DE-A-960 132, der kontinuierlich in der Transportleitung verlaufende Schüttgutstrom zur Messung derart unterbrochen werden, daß aus ihm der Meßanteil in einen Bypass ; umgeleitet werden muß und solange die Hauptleitung unterbrochen bleibt. Das erfindungsgemäße Verfahren kann problemlos in der Hauptleitung selbst ohne Einsatz eines Bypasses ausgeführt werden, wobei die kontinuierliche Zuführung von Material auf die Waage zu keinem Zeitpunkt unterbrochen werden muß und die weiter oben bereits genannten, hieraus resultierenden Nachteile vollständig entfallen.

Mit einer Anzahl Versuchen sowie auch theoretischer Ueberlegungen wurde versucht, die Randbedingungen zu ermitteln. Eine Variierung der Fallhöhe im Bereich von 2-3 m ergab keinen Einfluss auf die Genauigkeit des Resultates. Die Versuche wurden mit einer eher kleinen Einheit durchgeführt, wobei das Waagegefäss einen Inhalt von ca. 10 Litern aufwies. Es ist zur Zeit kein Grund erkennbar, sowohl ganz kleine als auch grosse Produktströme auf die gleiche Weise zu erfassen.

Die unterste Grenze ergibt sich aus der Auflösmöglichkeit der Waage, die in der Praxis ganz besonders von Gebäudevibrationen abhängig ist. Aus praktischen Erwägungen würde ein 1-Liter-Gefäss schon als klein bezeichnet.

Ein sehr wesentlicher Punkt der Erfindung liegt darin, daß ein Referenzzeitabschnitt gewählt wird, der insgesamt im ungestörten Messwertanstieg der Waage liegt. Im ersten Moment des Wägevorganges im Zeitpunkt der Sperrung des Ausganges der Waage tritt allein schon durch die Verschiebung entsprechender baulicher Elemente (Schieber, usw.) ein Störfaktor auf. Das Produkt schlägt anfänglich direkt auf das Waagegefäss selbst auf, dies ändert sich aber sofort, indem sich ein Produktpolster bildet. Die erste Zeit der Produktpolsterbildung schliesst deshalb gleichzeitig mehrere Störfaktoren mit ein, so dass sich zum Beispiel auch unter sehr rauhen Bedingungen nach 0,2-0,5 Sek. ein relativer Einfüllgleichgewichtszustand bezüglich der umgebenden Störfaktoren einstellt. Zu jedem beliebigen Zeitpunkt danach (innerhalb des ungestörten Messwertanstieges) können Messwerte von der Waage abgenommen, und für die Errechnung der Gewichtszunahme pro Zeiteinheit benützt werden. Es wurden verschiedene Ansätze versucht, rein theoretisch das Wägeprinzip zu erfassen, was jedoch jedesmal an der Tatsache scheiterte, dass die Umrechnung des Impulses (als Energie) in eine Kraft von dem Faktor Zeit abhängig ist. Die Zeit der Abbremsung des fallenden Produktstromes kann nur empirisch angenähert ermittelt werden. Der Produktstrom wächst bei der Füllung eines Gefässes dem Fallstrom entgegen, was sich in dem sogenannten Steigimpuls äussert. Bei unwirklichen Bedingungen, wenn der horizontale Querschnitt des Wägegefässes angenähert gleich gross ist wie die Querschnittsfläche des fallenden Produktstromes, wären beide, Fallimpuls und Steigimpuls, in der gleichen Grössenordnung. Die praktischen Versuche haben aber gezeigt, dass auch dieser Faktor als Fehler zumindest unterhalb der geforderten Genauigkeit von ± 1 ‰ liegt, da mindestens zwei Messwerte um die Referenzzeit verschoben zueinander in einem Verhältnis gesetzt werden. Der Faktor Steigimpuls/Fallimpuls muss bei einem zylindrischen Wägegefäss, bei dem die Querschnittsfläche ein Mehrfaches der Querschnittsfläche des auftreffenden Produktstromes ist, nicht berücksichtigt werden. Die Auftreffbedingungen des fallenden Produktstromes bleiben, ist ein Produktpolster einmal vorhanden, in hoher Genauigkeit konstant. Die letzten 10-20 % der Füllhöhe des Wägegefässes sollten auch aus praktischen Erwägungen für die Gewinnung von Messwerten nicht benützt werden. Die Versuche haben gezeigt, dass ein Füllbereich des Wägebehälters von etwa 20-80 % als ungestört angenommen werden kann. Ersichtlich fällt bei der neuen Erfindung auch die gesonderte Erfassung des Tara-Gewichtes vom leeren Messbehälter vollständig weg.

Ein ganz wesentlicher Kerngedanke der Erfindung liegt darin, dass der Produktstrom ununterbrochen, bzw. kontinuierlich zufliesst. Dies ist gerade die besondere Eigenheit der Impulsmess-Systeme. Alle traditionellen Behälterwaagen bedingen jedoch das Unterbrechen des Produktstromes für die exakte Erfassung des Gewichtswertes allein, was nicht nur das Unterbrechen des zuliessenden Produktstromes bedeutet, sondern zusätzlich das Abwarten der Beruhigungszeit. Die Versuche haben allerdings gezeigt, dass das erfindungsgemässe Messystem wenig empfindlich ist, auch für starke Schwankungen des Massestromes. Allerdings müssen hier zwei wesentliche Aufgabenkreise unterschieden werden.

Wenn der Produktstrom selbst geregelt werden soll, setzt dies eine entsprechende mechanische Regelvorrichtung vor dem Wägesystem voraus. Ist das Ziel eine sehr genaue Regelung, so ist auch ein genau arbeitendes Regelgerät z. Bsp. ein Feindosiergerät zu verwenden. Dabei nun zeigt es sich, dass der ungestörte Messwertanstieg ein sehr vollkommen linearer Messwertanstieg ist. Daraus kann gefolgert werden, dass hier der Referenzzeitabschnitt sehr klein, also z. Bsp. 0,05-0,2 Sekunden gewählt werden darf. Im Hinblick auf die Trägheit von mechanischen Regelelementen sind dies nahezu momentane Istwerte bzw. Regelsignale für eine allfällige Korrektur der Dosiereinstellung. Die sehr kurzfristige Messwertaufnahme bedeutet aber auch, dass bereits der Beginn einer Störung sofort festgestellt und entsprechend der Regelvorgang schon tendenziell richtig eingestellt werden kann. Auf diese Weise ist eine überraschend hohe Konstanz des Massestromes einstellbar, was z. B. für Mischvorgänge bzw. Zugabe von Flüssig-Komponente zu einem Schüttgutstrom besonders interessant ist.

Der zweite Aufgabenkreis ist eine exakte Feststellung eines vorgegebenen Produktstromes auf den im regeltechnischen Sinne nicht Einfluss genommen werden kann. Hier soll sowohl kurzfristig als auch über bestimmte Zeitperioden die momentan wie auch längerfristig durchgeflossene Menge ermittelt werden. Im Gegensatz zu Wasser ist es bei Schüttgütern sehr schwierig, ohne besondere apparative Zusätze einen wirklich konstanten Produktstrom zu erzeugen. Entsprechend der Umlaufgeschwindigkeit der häufig verwendeten Schnecken- oder Schleusendosierer treten periodische Schwankungen auf. Die Erfindung erlaubt hier nun durch eine entsprechende Vergrösserung des Referenzwertes, z. Bsp. 1-5 Sekunden, entsprechende kleine Schwankungen bereits zu ermitteln. Durch eine beliebige Wiederholung des Messverfahrens können aber auch Leistungsschwankungen über eine längere Zeitspanne gemittelt werden. Durch Bildung von statischen Mittelwerten kann so auch bei grossen Leistungsschwankungen der gesamte Massestrom (eingeschlossen die Perioden während denen keine Wägung erfolgt) mit der gewünschten Genauigkeit von ± 2 ‰ erfasst werden.

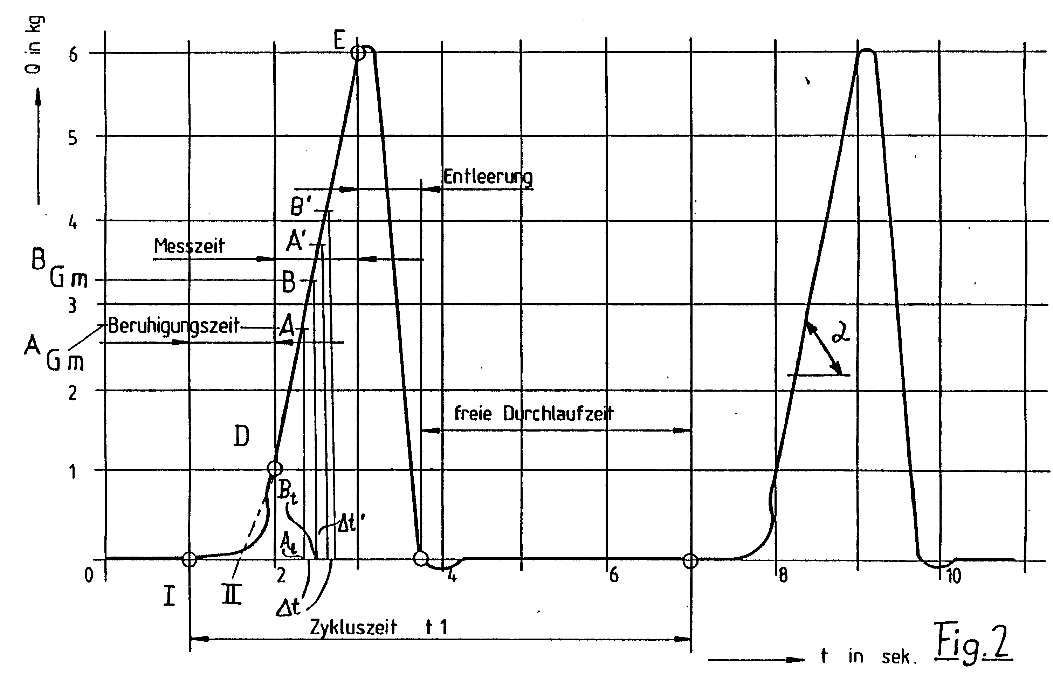

Beim erfindungsgemässen Verfahren wird also in jedem Fall der Impuls des fallenden Produktstromes der bei der Verwägung vorhanden ist, durch die Waage mit erfasst; durch die erfindungsgemäss vorgegebenen Verfahrensbedingungen wurde jedoch in überraschender Weise festgestellt, dass der Problemkreis-Impuls die Messwerte nicht verfälscht, so dass der Istwert des Durchsatzes mit überraschend hoher Genauigkeit ermittelt werden kann. Etwas konkreter ausgedrückt bedeutet dies, dass das neue Verfahren sehr genau den jeweils momentanen Massestrom bzw. in einem entsprechenden Diagramm (Fig. 2) den Massestrom in kg über der Zeit in Sekunden bzw. den Steigungswinkel $\alpha$ ergibt. Messtechnisch kann der erhaltene Wert je nach besonderem Fall auch als blosser Wert, z. Bsp. entsprechende Anzahl Volt, abgegeben oder in kg/min. oder t/h errechnet werden. Es wird vorgeschlagen, die Messung innerhalb eines nur sehr kurzen Referenzzeitabschnittes, dessen Länge vorzugsweise im Bereich von 0,05 bis 10 sek., ganz besonders vorteilhaft von 0,2 bis 7 sek. gewählt wird, durchzuführen, (aber auch Referenzzeitabschnitte unter 0,05 sek. können bei Fehlen entsprechender Umgebungsstörungen eines Mühlebetriebes und absolut konstanter Speisung verwendet werden. Dies stellt in Verbindung mit der erfindungsgemäss ebenfalls geforderten elektronischen Verwägung (d. h. das Wägesystem liefert in grösster Schnelle die benötigten Momentanwerte) sicher, dass eine Messung hoher Genauigkeit innerhalb eines so kurzen Zeitraums möglich ist, dass dabei eine allfällig verbleibende, störende Differenz der Impulsanteile zu Beginn und Ende des Messzeitraumes, die als Resteinfluss des Impulses theoretisch bei der Bestimmung des Differenzwertes noch errechenbar wäre, praktisch vernachlässsigbar ist. Die Tatsache, dass erfindungsgemäss innerhalb des Bereiches der Waage gemessen werden soll, innerhalb dessen ein ungestörter, im Mittel linearer Anstieg der gemessenen Momentanmesswerte nach den durch den ersten Auftrittsimpuls direkt auf den Gefässboden, und das Sperren des Gefässauslasses usw., bedingte Störungen, d. h. nach der Beruhigungsphase der Waage, liegt, wird die Voraussetzung für die hohe Genauigkeit der letztlich ermittelten Verhältniszahl geschaffen.

In vorteilhafter Ausgestaltung des erfindungsgemässen Verfahrens können zwischen Sperren und Freigeben des Ausgangs der Waage mehrere Referenzzeitabschnitte hintereinander vorgesehen und erfasst, aus deren einzelnen Wertpaaren (Wägewert-Zeit) die mittlere Gewichtszunahme pro Zeiteinheit (mittlerer Durchfluss) errechnet bzw. bestimmt werden. Vorteilhafterweise kann dabei das Verfahren etwa so ausgeführt werden, dass nach der Erfassung des ersten Referenzzeitabschnittes der hierfür ermittelte Wert des Durchflusses bestimmt wird. Innerhalb des gleichen Wägespieles wird ein Referenzzeitabschnitt gewählt und der mittlere Durchfluss errechnet. Daraus kann im Falle einer Regelung ein Signal für die Dosierung des Produktstromes abgeleitet werden. Ein dritter Referenzzeitabschnitt ergibt bereits einen sehr genauen Wert des Produktstromes und es wird gleichzeitig der auslaufende Produktstrom sehr genau erfasst. Diese Ausgestaltung ist besonders beim Beginn einer ersten Wägeserie, beim Start des Produktstromes angezeigt, ganz besonders wenn gleichzeitig der Produktstrom geregelt werden soll.

Im Falle der Anwendung von elektronischen, wegunabhängig arbeitenden Waagen, mit denen nicht nur der jeweils aktuelle Wägewert erfassbar ist, sondern die auch eine integrale Erfassung bzw. Auswertung der über den Messzeitraum hinweg gemessenen Messwertverläufe ermöglichen, können auch extreme Variationen des Schüttgutstromes genau erfasst werden. Setzt man bei einem erfindungsgemässen Verfahren eine solche Waage ein, dann ergibt sich der Vorteil, dass dann anstelle einer einfachen Differenzbildung zwischen zwei Messwerten an Beginn und Ende des Referenzzeitabschnittes eine integrale Erfassung des dazwischenliegenden Kurvenverlaufes erfolgt. Hieraus kann, ausgehend von dem Messwert zu Beginn des Referenzzeitabschnittes, ein korrigierter Messwert für das Ende des Referenzzeitabschnittes derart bestimmt werden, dass er einen linearen Messwertanstieg über der Zeit entspricht, dessen Integralfläche (über der Zeit) exakt der Integralfläche des gemessenen Messwertanstieges innerhalb des Referenzzeitabschnittes entspricht, und somit die höchstmögliche Genauigkeit eines entsprechend gemittelten Anstiegswinkel α bzw. ṁ dargestellt, so dass der Ist-Wert auch bei verhältnismässig stark schwankendem Produktstrom exakt erfasst, und auch hier eine verhältnismässsig genaue Bestimmung des gesamten Massestromes möglich wird.

Bei einer weiteren besonders vorteilhaften Ausgestaltung ist die Zeitdauer zwischen zwei aufeinanderfolgenden Wägespielen in Abhängigkeit der Konstanz des Schüttgutstromes frei wählbar, vorteilhafterweise wird jeweils beim Anfahren des Schüttgutstromes bzw. beim Beginn des ersten Wägespieles der Waagenausgang gesperrt. Ganz besonders vorteilhaft ist es, wenn eine grosse Anzahl Wägespiele, z. Bsp. mehrere 100 oder mehrere 1 000 in einigen Stunden durchgeführt werden, und statistisch die mittlere Gewichtszunahme pro Zeiteinheit oder über die gesamte Zeit durchgeflossene Menge errechnet wird, was so ermittelt der tatsächlich durchgeflossenen Menge, mit der Eingangs erwähnten Genauigkeit von unter ± 2‰ entspricht. In vielen Fällen ist es nicht zwingend erforderlich, den Waagebehälter nach einem Wägespiel fur ein nächstes Wägespiel vollständig zu leeren.

Eine besonders vorteilhafte Ausgestaltung des erfindungsgemäßen Verfahrens besteht für den Fall, daß mehrere Referenzzeitabschnitte vorgesehen und erfaßt werden, aus deren einzelnen Differenzwerten ein Mittelwert gebildet wird, darin, daß die Zeitdauer zwischen zwei aufeinanderfolgenden Referenzzeitabschnitten kürzer als die Zeitdauer eines einzelnen Referenzzeitabschnittes selbst ist.

Eine weitere vorteilhafte Ausgestaltung des Verfahrens nach der Erfindung besteht auch darin, daß der errechnete Wert des Durchsatzes in ein Steuersignal umgesetzt und dieses als Istwertvorgabe an eine Durchsatz-Regeleinrichtung im Produktzulauf angelegt wird ; hierdurch ist die Möglichkeit gegeben, einen konstanten vorgegebenen bzw. gewünschten Produktdurchsatz im Rahmen einer wirksamen Regelkette in der Förderleitung sicherzustellen.

Das erfindungsgemässe Verfahren lässt sich so steuern, dass die Möglichkeit, anstelle des (zeitbezogenen) Produktdurchsatzes die Absolutgrösse für die Menge des geförderten Produktes selbst erfasst wird, sofern zusätzlich alle Mittel für eine Unterbrechung des Produktstromes ebenfalls vorgegeben wird. Dies wird in vorteilhafter Ausgestaltung des erfindungsgemässen Verfahrens dadurch erreicht, dass aus dem berechneten Durchsatz und einer ab dem Schliesszeitpunkt des Waagenausganges laufenden Zeitmessung die geförderte Schüttgutmenge kontinuierlich berechnet wird. Es kann dabei das laufende Zeitmess-Signal bei jedem neuerlichen Schliessvorgang am Waagenausgang auf Null bzw. seinen Ausgangswert zurückgestellt werden, wodurch sich die Menge des Schüttgutes ermitteln lässt, die jeweils in einer Füllung enthalten ist. Wenn zum Beispiel die Aufgabe darin besteht, genau 5 t eines Schüttgutes, z. Bsp. Mehl oder Getreidekörner, durchlaufen zu lassen, können die letzten 100-200 kg. als Einzelmessung abgegeben werden. In einer weiteren vorteilhaften Ausgestaltung des erfindungsgemässen Verfahrens kann es ferner dazu eingesetzt werden, auch die Menge pro Einzelfüllung des Behälters genau einzuregeln, indem ein der geförderten Schüttgutmenge entsprechendes Steuersignal gebildet und zur Steuerung der Verschliesseinrichtung am Waagenausgang eingesetzt wird. Hierdurch lässt sich in einfacher Weise sicherstellen, dass der Waagenausgang immer rechtzeitig dann geöffnet wird, wenn eine gewünschte Füllmenge im Waagenbehälter exakt erreicht ist. Durch Verwendung einer geeigneten Logic für die Steuerung können dabei auch Einflüsse wie z. Bsp. die Oeffnungszeit oder der über die Oeffnungszeit hinweg noch erfolgende kontinuierliche Produktzulauf erfasst und ausgeschaltet werden, so dass die nach unten abgegebene Produktmenge in Abhängigkeit von den gegebenen Transportbedingungen auch genau den richtigen bzw. gewünschten Wert hat.

Die erfindungsgemässe Vorrichtung geht aus von einer Vorrichtung zur Erfassung des Durchsatzes eines Schüttgutstromes mit einer Waage, die eine Zuführung und eine Abführleitung für das Schüttgut aufweist, wobei der Waagenausgang an der Abführleitung gesperrt oder freigegeben werden kann. Erfindungsgemäss wird dabei vorgesehen, dass die Waage als elektronische Waage ausgebildet, eine steuerbare Schüttgut-Sperrvorrichtung am Ausgang der Waage angeordnet und eine Einrichtung zur wiederholten Ermittlung der Gewichtsanzeige bei ununterbrochen zufliessendem Produkt des in die Waage wirkenden Schüttgutes während eines kurzen Referenzzeitabschnittes bei geschlossener Stellung der Schüttgut-Sperrvorrichtung vorgesehen ist.

Die erfindungsgemässe Vorrichtung ist einfach aufgebaut und erfordert auch nur relativ kleine Abmessungen. Die zum Beispiel bei Bandwaagen erforderliche, relativ lange horizontale Ausdehnung, entfällt, wodurch sich nicht nur eine erhebliche Platzeinsparung, sondern auch ein vergleichsweise geringer Aufwand bei der Herstellung ergibt.

Die erfindungsgemäße Vorrichtung weist den großen Vorteil auf, daß, in vorteilhafter Ausgestaltung, ihre Waage mit einem Verwägebehälter versehen sein kann, der als Abschnitt der Förderleitung selbst ausgebildet ist, wodurch sich eine besonders platzsparende und günstige Einsetzbarkeit der erfindungsgemäßen Vorrichtung ergibt. Mit Vorteil wird dabei der Verwägebehälter der Waage mit einem Innenquerschnitt ausgeführt, der eine dem Innenquerschnitt der Zuführleitung oder der Abführleitung entsprechende Querschnittsform aufweist. Dies hat den großen Vorteil, daß der Durchlaufraum des Produktes auch im Bereich der Waage völlig den Durchläufen in der Zu- und der Abführleitung entspricht, somit auch insoweit keinerlei Störeffekte auf den Produktdurchfluß ausgeübt werden und eine Selbstreinigung ermöglicht ist.

Besonders bevorzugt wird bei einer erfindungsgemäßen Vorrichtung der Verwägebehälter mit einem zylindrischen Durchlaufraum versehen, dessen Höhe 1,5 bis 5 mal seinem Durchmesser entspricht.

Bei einer weiteren vorteilhaften Ausgestaltung der erfindungsgemäßen Vorrichtung wird ein Abschlußschieber über einen pneumatischen Zylinder betätigt, der seinerseits über einen elektropneumatischen Wandler von einem Rechner angesteuert wird, wodurch ein Schieber mit einer steuerbaren Oeffnungsgeschwindigkeit bewegt werden kann, was in jedem Fall eine Vergleichmässigung der Gutabgabe nach Beendigung eines Wägezyklusses erreichen lässt.

Vorteilhafterweise weist das Wägegefäss eine einfache, zylindrische Form auf, das unten durch einen von den elektronischen Rechnermitteln steuerbaren Schieber gesperrt oder geöffnet werden kann. Als Variante wäre es auch denkbar, eine Wägemulde zu verwenden, die jeweils für ein Wägespiel in den Produktstrom einschiebbar ist. Auch hier müsste für die erste Messwertaufnahme die anfängliche Störzeit abgewartet werden.

Eine andere vorteilhafte Ausgestaltung der erfindungsgemäßen Vorrichtung besteht auch darin, daß eine Dosiereinrichtung in der Zuführleitung zur Waage vorgesehen und mit einem Vorgabegerät zur Einstellung einer vorwählbaren kontinuierlichen Durchsatzleistung verbunden ist, wobei, wiederum vorzugsweise, ein Rechner zur Ansteuerung dieses Vorgabegerätes vorgesehen sein kann, der vom Ausgang der Einrichtung zur Ermittlung des Durchsatzes des in der Waage befindlichen Schüttgutes angesteuert wird, und wobei Rechner, Vorgabegerät, Dosiereinrichtung und Einrichtung zur Ermittlung des Durchsatzes eine Durchsatzregeleinrichtung ausbilden. Dabei läßt sich die Dosiereinrichtung für leicht fließfähige Schüttgüter in vorteilhafter Weise als Drehschieber ausbilden, während sie bei schwerfließfähigen Schüttgütern mit besonderem Vorteil als Dosierschnecke ausgeführt ist.

Es ist weiterhin von Vorteil, wenn bei einer erfindungsgemäßen Vorrichtung der Raum unmittelbar über und der Raum unmittelbar unter der Waage über ein seitliches Druckausgleichsrohr miteinander verbunden sind.

Bei der erfindungsgemäßen Vorrichtung besteht auch die vorteilhafte Möglichkeit, dieselbe nicht nur in einer senkrecht verlaufenden Transportleitung einzusetzen, sondern sie sogar in schräg angeordneten Schüttgutleitungen zu verwenden. Dabei wird dann auch der Verwägebehälter in einer der Schräge der Schüttgutleitung entsprechenden Schräge eingebaut, d. h. die Mittelachsen beider fallen zusammen oder sind zumindest parallel zueinander ausgerichtet. Eine solche schräge Einbaumöglichkeit ergibt den Vorteil, daß ein direkter, sogar nachträglicher Einbau in bereits bestehende Siloanlagen mit Mehrfachzellen ohne Vorsehen einer Extrahöhe erfolgen kann.

Die Erfindung wird nachfolgend anhand der Zeichnung im Prinzip beispielshalber noch näher

. erläutert. Es zeigen :

Fig. 1 eine schematische Darstellung der Hauptelemente einer erfindungsgemäßen Vorrichtung ;

Fig. 2 den Verlauf des gemessenen Schüttgutgewichtes pro Zeiteinheit während eines Wägezyklusses bei einem erfindungsgemäßen Verfahren ;

Fig. 3 eine diagrammatische Darstellung der Aufeinanderfolge mehrerer Referenzzeitabschnitte innerhalb des linearen Meßwertanstiegs der Waage (während eines Wägezyklusses) ;

Fig. 4 eine Prinzipdarstellung zur Kombination des erfindungsgemäßen Verfahrens mit einer kontinuierlichen Durchflußregelung ;

Fig. 5 ein Schaltschema zur Messung der Kräfte an einer in der Vorrichtung eingesetzten Waage ;

Fig. 6 die Darstellung eines Dehnmeßstreifen-Wägebalkens zum Einsatz bei einer erfindungsgemäßen Vorrichtung ;

Fig. 7 eine Prinzipdarstellung einer erfindungsgemäßen Vorrichtung, die in einer senkrecht verlaufenden Transportleitung vorgesehen ist, mit einer Schiebersteuerung im Zulaufrohr ;

Fig. 8 eine Prinzipdarstellung der Anordnung einer erfindungsgemäßen Vorrichtung in einer schräg verlaufenden Transportleitung, mit der Möglichkeit einer Schiebersteuerung für die Zuführleitung.

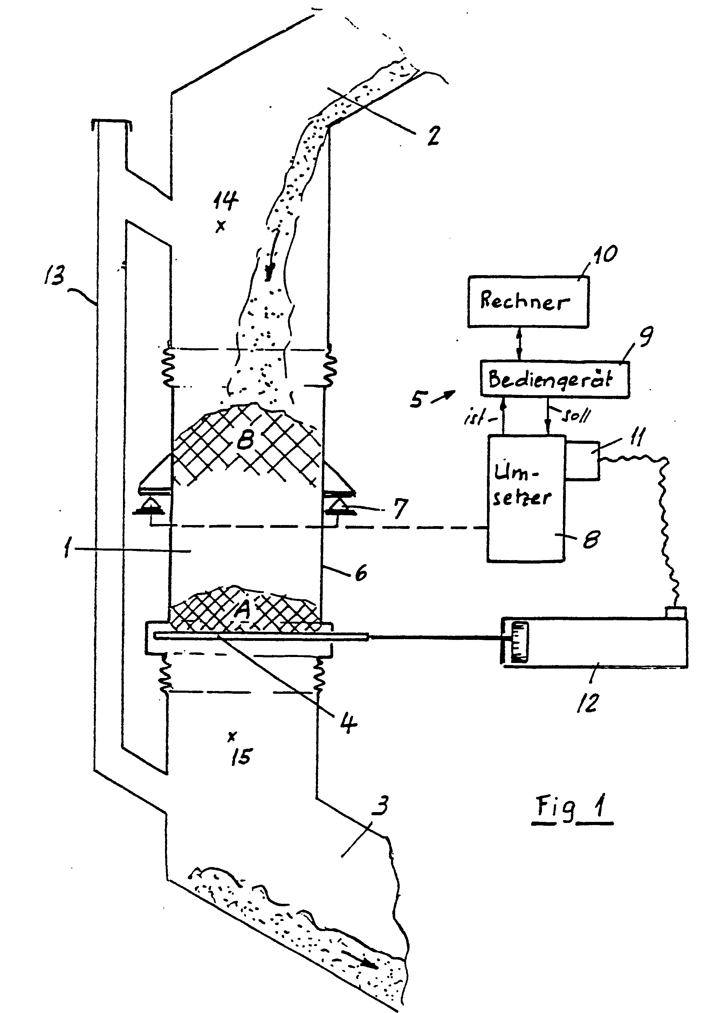

In Fig. 1 ist im Prinzip eine Verwägevorrichtung gezeigt, die in ihrem oberen Bereich eine Zuführleitung 2, in ihrem mittleren Bereich eine Rohrwaage 1 und in ihrem unteren Bereich eine Abführleitung 3 aufweist. Die Rohrwaage 1 ist mit einem Abschlußschieber 4 versehen, mittels dessen der Auslauf der Rohrwaage 1 verschlossen oder geöffnet werden kann. Des weiteren ist auch noch eine Rechner-Einheit 5 zur Verwertung der von der Verwägeeinrichtung angelieferten Meßsignale vorgesehen.

Der Hauptteil der Waage 1 wird durch einen Waagenbehälter 6 gebildet, der auf Druckmeßdosen 7 oder auf anderen, zur raschen Erfassung momentaner Gewichtswerte geeigneten Elementen abgestützt ist. Der Waagenbehälter 6 ist bei der gezeichneten Prinzipdarstellung so angeordnet und ausgebildet, daß er als Teil der Förderleitung selbst angeordnet ist, d. h. er ist mit einem Durchlaufraum versehen, dessen Querschnitt dem der Zuführleitung 2 bzw. der Abführleitung 3 entspricht. Hierdurch ist gewährleistet, daß das aus der Zuführleitung 2 ankommende Produkt ohne eine durch den Innenquerschnitt des Waagenbehälters 6 gebildete Störung in die Abführleitung 3 weiterströmen kann.

Die Druckmeßdosen 7 geben das von ihnen erzeugte, dem gemessenen Gewicht entsprechende Signal an einem Umsetzer 8 weiter, der über ein Bedienungsgerät 9 mit einem Rechner 10 verbunden ist. Dabei ist der Umsetzer 8 auch an einen elektro-pneumatischen Wandler 11 angeschlossen, der mit einem pneumatischen Zylinder 12 zur Steuerung des Taktspieles der Waage 1 verbunden ist. Die gezeigte Anordnung ermöglicht ein einfaches elektronisches Erfassen der gemessenen Gewichtswerte sowie deren Weiterleitung an den Rechner 10 zur Berechnung des gewünschten Produktdurchsatzes (Produktmenge pro Zeit). Des weiteren ist ein Druckausgleichsrohr 13 für die Ausschaltung solcher Störfaktoren vorgesehen, die dadurch entstehen, daß in der Zuführleitung 2 und der Abführleitung 3 unterschiedliche Druckverhältnisse auftreten können. Hierzu verbindet das Druckausgleichsrohr 13 einen Raum 14 direkt oberhalb des Waagenbehälters 6 mit einem Raum 15 direkt unterhalb desselben in freier Verbindung, unabhängig von der Stellung des Abschlußschiebers 4.

In Fig. 2 ist der Verlauf der gemessenen Gewichtszunahme Q (in kg) über der Zeit t dargestellt. Der Zeitpunkt I bezeichnet dabei den Schließzeitpunkt des Waagenausganges, d. h. die Vollendung der Schließbewegung des Abschlußschiebers 4. Es wird angenommen, daß ein kontinuierlicher Schüttgutzufluß zur Waage 1 vorliegt.

Mit der Schließung des Abschlußschiebers 4 (Zeitpunkt I) beginnt sich nun der Waagenbehälter 6 zu füllen, wobei das erzeugte Wägesignal entsprechend der Kurve vom Ausgangspunkt I zunächst etwas unregelmäßig und mit erkennbaren Überschwingungen ansteigt, weil hier das gesamte Waagensystem durch den ersten Aufprallimpuls in Schwingungen gebracht wird und deshalb überschwingt. Bei gut ausgebildeter Dämpfung ist jedoch bereits nach kurzer Zeit, im dargestellten Beispiel etwa 1 sek., eine Beruhigung eingetreten, die etwa dem Punkt D entspricht. Vom Punkt D an beginnt nun ein linearer Anstieg der gemessenen Werte bishin zum Punkt E, bei welchem der Abschlußschieber geöffnet wird : entsprechend dem nunmehr erfolgenden Auslaufen des Produktes fällt das Gewicht in der Waage 1 wieder bis zu seinem Nullwert ab, wonach sich bei der Waage infolge der auftretenden Trägheitseffekte sogar kurzzeitig ein negatives Gewichtssignal einstellt. Anschließend bleibt der Schieber während einer gewissen Zeit geöffnet, bis er wieder geschlossen wird : nach erfolgter Schließung (erneuter Schließzeitpunkt des Waagenausgangs bzw. beendete Schließbewegung des Abschlußschiebers 4) wiederholt sich der ganze Vorgang erneut, was in Fig. 2 dargestellt ist.

Wesentlich für das erfindungsgemäße Verfahren ist hierbei, daß im Bereich des linearen Meßwertanstiegs, d. h. im Bereich zwischen dem Beruhigungspunkt D und dem Endpunkt des linearen Gewichtsanstiegs E zu Beginn der Schieberöffnung die für das erfindungsgemäße Verfahren erforderlichen Messungen bei gleichzeitiger Zeiterfassung erfolgen. Der Punkt $A_t$ sei nun der dem Meßpunkt A zugeordnete Zeitpunkt, wobei $A_{Gm}$ der hierbei von der Waage gemessene Gewichtsausschlag sein soll. $B_t$ bezeichnet die Zeit, die dem Meßpunkt B zugeordnet ist, und $B_{Gm}$ sei der bei Punkt B festgestellte Meßwertausschlag für das Gewicht (« Gewichtsausschlag »). Eine Ablesung des Meßwertes während des fortgesetzten Zulaufens von Schüttgut erfaßt stets sowohl das Gewicht, wie auch den Impuls des fallenden Produktstromes gleichzeitig. Daher kann eine solche Einzelmessung niemals das absolute Gewicht des im Waagenbehälter 6 momentan aufgehäuften Schüttgutes darstellen.

Innerhalb des bereits genannten linearen Bereiches der gemessenen Gewichtszunahme erfolgt nun eine Messung, etwa zwischen den Punkten A und B, die über einen nur sehr kurzen Referenzzeitabschnitt $\Delta t$ vorgenommen wird. Da es sich hier um einen sehr kurzzeitigen Vorgang handelt, kann davon ausgegangen werden, daß die Impulsänderung zwischen dem Punkt A und dem Punkt B so außerordentlich gering ist, daß sie vernachlässigt werden kann. Hieraus folgt, daß bei der Berechnung der Differenz der Werte $A_{Gm}$ sowie $B_{Gm}$ dann, wenn das Referenzzeitintervall nur sehr kurz gewählt ist, ein Differenzwert auftritt, bei dem der Anteil des von ihm noch erfaßten Impulses an Gesamtsignal als vernachlässigbar angesehen werden kann und der somit auch unter der Anforderung großer Genauigkeit als ausreichend genauer Differenzwert für das Differenzgewicht zwischen dem Zeitpunkt $A_t$ und $B_t$ verwendet werden kann.

Bezeichnet man das auf die Zeiteinheit bezogene Gewicht des in die Waage eingeflossenen Schüttgutstromes als « Schüttgutdurchsatz », so ergibt sich dieser aus der Relation zwischen dem ermittelten Differenzwert einerseits und dem Referenzzeitabschnitt andererseits wie folgt, wobei der Ausdruck : $\Delta G/\Delta t$ auch als sekundlicher Massestrom = $\dot{m}$ oder aber als Steigungswinkel $\alpha$ (bzw. $\tan \alpha$) angegeben werden kann.

$$B_{Gm} - A_{Gm}/B_t - A_t = \Delta G/\Delta t$$

Hierin bezeichnet $\Delta G$ das Differenzgewicht und $\Delta t$ die Dauer des Referenzzeitabschnittes.

Damit ergibt die Vermessung des Kurvenverlaufes innerhalb des Referenzzeitabschnittes $\Delta t$ eine Kurzzeitmessung, aus welcher sehr schnell und mit großer Genauigkeit der Wert des momentanen Schüttgutdurchsatzes unschwer festgestellt werden kann. Dabei besteht die Möglichkeit, wie aus Fig. 2 ebenfalls ersichtlich ist, daß im Bereich des linearen Meßwertanstiegs zwischen den Punkten D und G nicht nur während eines Referenzzeitabschnittes (Punkte A-B), sondern auch während eines weiteren Referenzzeitabschnittes zwischen den Punkten A' und B' zusätzlich eine gleiche Messung vorgenommen wird. Wenn dabei der Referenzzeitabschnitt $\Delta t$ gleich groß wie zwischen den Punkten A und B gewählt wird, kann der Durchsatzwert, der sich aus der zweiten Messung ableiten läßt, mit dem Durchsatzwert aus der Messung während des ersten Referenzzeitabschnittes verglichen und, falls eine Abweichung vorliegt, ein Mittelwert gebildet werden, der dann mit noch größerer Genauigkeit den gemittelten Durchsatz zwischen dem Zeitpunkt $A_t$ und $B'_t$ wiedergibt. Bei Einsatz geeigneter Verwägungssysteme besteht keine Schwierigkeit, innerhalb des linearen Meßwertanstiegs zwischen den Punkten D und E eine Vielzahl solcher Einzelmessungen, jeweils über einen identischen Referenzzeitabschnitt $\Delta t$ ausgeführt, vorzunehmen und nach jeder neuen Messung den vorher bestimmten Durchsatzwert im Rahmen einer erneuten Mittelung zu korrigieren.

Die oben angegebene Messung des Differenzgewichtes $\Delta G$ und der Referenzzeitdauer $\Delta t$ läßt aber über die Berechnung des momentanen Durchsatzwertes hinaus auch noch, falls gewünscht, die Möglichkeit zu, auch die Gesamtfüllung des Waagenbehälters 6 bis zu dessen Entleerung, somit das insgesamt zwischen dem Zeitpunkt I und dem Punkt E in den Waagenbehälter 6 eingespeiste Produktgewicht ebenfalls in großer Genauigkeit zu ermitteln. Denn dies kann unschwer dadurch erfolgen, daß das innerhalb eines Referenzzeitabschnittes gemessene Differenzgewicht $\Delta G$ in geeigneter Weise linear extrapoliert und hochgerechnet wird, so daß die Gewichtsdifferenz zwischen dem Punkt E einerseits und dem Schnittpunkt II der Geraden des linearen Meßwertanstiegs mit der Abzisse (Zeitachse) andererseits berechnet wird : diese Gewichtsdifferenz ist dann eine sehr genaue Erfassung des Gewichtes des wirklich in den Behälter eingeströmten Schüttgutes, was durch Versuchsergebnisse bestens belegt werden konnte. Im Falle, daß zur Meßwerterfassung eine elektronische Waage eingesetzt wird, mit der gleichzeitig eine integrale Auswertung der Meßwertkurve über der Zeit erfolgen kann, besteht sogar die Möglichkeit, daß durch eine geeignete elektronische Schaltung für die Berechnung des Durchsatzes oder des in den Waagenbehälter eingespeisten Schüttgutgewichts gemessene tatsächliche Kurvenverlauf ersetzt wird durch einen Kurvenverlauf, der aus einer z. B. durch den Punkt E verlaufenden Geraden besteht, bei der das Integral über den Zeitraum, der zwischen ihrem Schnittpunkt mit der Abzisse und dem Punkt E liegt, gleich dem Integral der tatsächlich gemessenen Kurve über den Zeitraum zwischen den Punkten I und E ist.

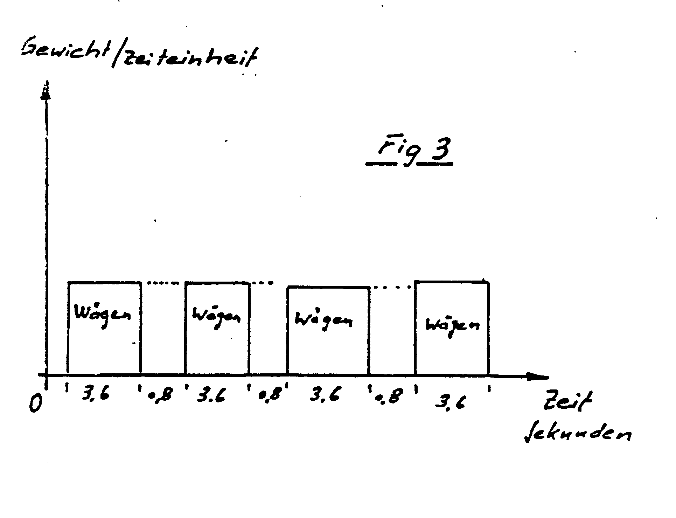

Die Darstellung nach Fig. 3 zeigt die Möglichkeit, innerhalb eines vorgegebenen größeren Zeitraums mehrere Wägevorgänge, d. h. Wägezyklen auszuführen. Dabei können die mit « Wägen » bezeichneten Verwägungen sowohl als vollständige, aufeinanderfolgende Wägezyklen über einen längeren Zeitraum hinweg, als auch als einzelne Referenzzeitabschnitte innerhalb eines einzelnen Wägezyklusses angesehen werden. Die Erhöhung der Einzelmessungen sowohl innerhalb eines Wägezyklusses, als auch innerhalb eines übergeordneten Zeitraums in Form einer Erhöhung der einzelnen Wägezyklen selbst führt zu einer laufend verbesserten und genaueren Bestimmung der gesuchten Werte infolge der Erfassung einer größeren Anzahl einzelner Meßwerte und der Möglichkeit, durch Mittelung dann statistisch verbesserte Werte zu erreichen.

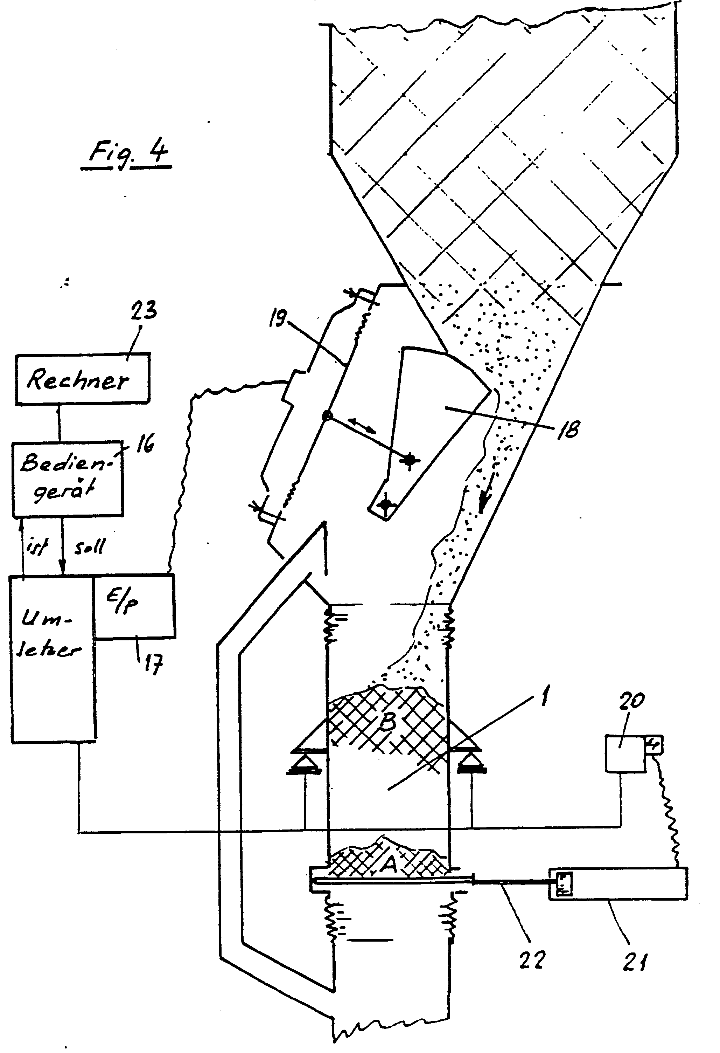

In Fig. 4 ist ein weiteres prinzipielles Ausführungsbeispiel für die Erfindung dargestellt, bei dem als zusätzliche Funktion neben der Gewichts- bzw. Durchsatzerfassung eines kontinuierlichen Schüttgutstromes auch noch eine gewünschte Durchsatzleistung vorwählbar eingestellt und sogar eingeregelt werden kann. Die gezeigte Einrichtung weist hierzu einen Rechner 23 und ein Vorgabegerät 16 auf, das über einen ersten elektropneumatischen Wandler 17 und über eine pneumatische Kraftmembrane 19 mit einem Dosierelement 18 sowie über einen zweiten elektropneumatischen Wandler 20 mit einem pneumatischen Zylinder 21 und einem Abschlußschieber 22 verbunden ist. Die (zur Darstellung nach Fig. 1 identische) Waage 1 erlaubt hier die beiden vorgenannten Funktionen. Die Öffnungsstellung des Dosierelementes 18 wird jeweils während eines Referenzzeitabschnittes $\Delta t$ eingeregelt und bei jeder wiederholten Messung korrigiert. Der jeweils ermittelte Durchsatz wird mit einem Vorgabewert verglichen und der gewünschte Durchsatz mit dem Dosierelement 18 laufend eingeregelt. Das Dosierelement 18 kann für schwerfließfähige Güter auch als Dosierschnecke mit variabler Drehzahl ausgebildet sein.

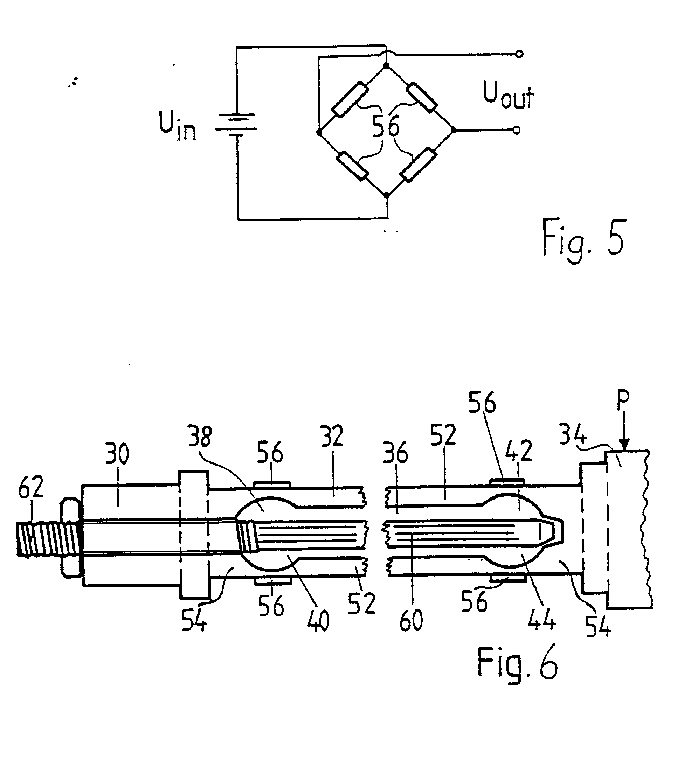

In Fig. 6 ist ein Dehnmessstreifen-Wägebalken im Prinzip gezeigt, der bei einer erfindungsgemäßen Vorrichtung zur Erfassung der Meßwerte eingesetzt werden kann. Er weist einen starren Träger 30, einen Biegebalken 32 sowie einen Flansch 34 zur Übertragung einer auf ihn wirkenden Kraft P auf. Der Biegebalken 32 besteht dabei aus einem elastischen Material und ist nach Art eines Viergelenksystems ausgebildet. Hierzu weist er einen im Querschnitt hantelförmigen Durchbruch 36 auf, der mittig im Biegebalken 32 insbesondere derart angeordnet ist, daß seine Längsachse mit der Längsachse des Biegebalkens 32 übereinstimmt. Der Mittelteil des hantelförmigen Durchbruchs 36 ist mit einem rechteckigen Querschnitt versehen. Die den « Gewichten » der Hantel entsprechenden Abschnitte weisen dagegen einen kreisförmigen Querschnitt auf. Jeder im Querschnitt kreisförmige Abschnitt des Durchbruches 36 entspricht zwei Gelenkstellen 38 und 40 bzw. 42 und 44 : diese Abschnitte werden daher in folgenden « Gelenkstellen 38, 40, 42 bzw. 44 » genannt. Bei Einwirkung einer Kraft P auf den Flansch 34 verformt sich der Biegebalken 32 im wesentlichen im Bereich seiner vier Gelenkstellen 38 bis 44. Der Biegebalken ist hierbei über seinen Träger 30 ortsfest mit einer starren Basis 26 verbunden.

Der hantelförmige Durchbruch 36 wird in Querrichtung im wesentlichen von zwei symmetrisch zur Biegebalken-Längsachse angeordneten balkenartigen Biegeelementen 52 und in Längsrichtung von zwei Endstücken 54 umgrenzt. Die Endstücke verbinden jeweils paarweise zwei einander gegenüberliegende Enden der Biegeelemente 52. Der so erhaltene Aufbau des Biegebalkens 32 ist demnach im wesentlichen parallelogrammartig.

An den Stellen der äußeren, einander abgekehrten Oberflächen der Biegeelemente 52, die sich bei Beaufschlagung des Biegebalkens 32 mit einer Kraft P am stärksten verformen, sind elektromechanische Wandlerelemente 56 befestigt. Da dies die Gelenkstellen 38 bis 44 sind, sind die Wandlerelemente 52 auf den oberhalb bzw. unterhalb der Gelenkstellen befindlichen Abschnitten der äußeren Oberflächen der Biegeelemente 52 befestigt. Vorzugsweise weisen die vier Wandlerelemente 56 Dehnmeßstreifen auf, und zwar zwei von ihnen gegebenenfalls zusätzlich Kompensationswiderstände.

Die Wandlerelemente 56 sind gemäß Fig. 5 in üblicher Weise in einer Brückenschaltung verschaltet. Diese Brückenschaltung wird eingangsseitig von der Spannung $U_{in}$ versorgt und gibt ausgangsseitig ein dem Kraftmeßsignal korrespondierendes Signal $U_{out}$ ab. Die Wandlerelemente 56 können hierbei entweder aus einer Parallelschaltung oder aus einer Serienschaltung eines Kompensationswiderstandes und eines Dehnmeßstreifens oder aus einer Kombination besagter Parallel- und Serienschaltung bestehen.

Die in Fig. 6 gezeigte Vorrichtung weist zusätzlich auch noch einen den Biegebalken 32 bei Überlast abstützenden Sicherungsstab 60 auf, der über sein hinteres Ende 62 mit dem Träger 30 und dem daran befestigten Endstück 54 des Biegebalkens 32 starr verbunden ist. Im übrigen ist Zweck und Ausführung des Sicherungsstabes zur weiteren Beschreibung der Erfindung nicht wesentlich.

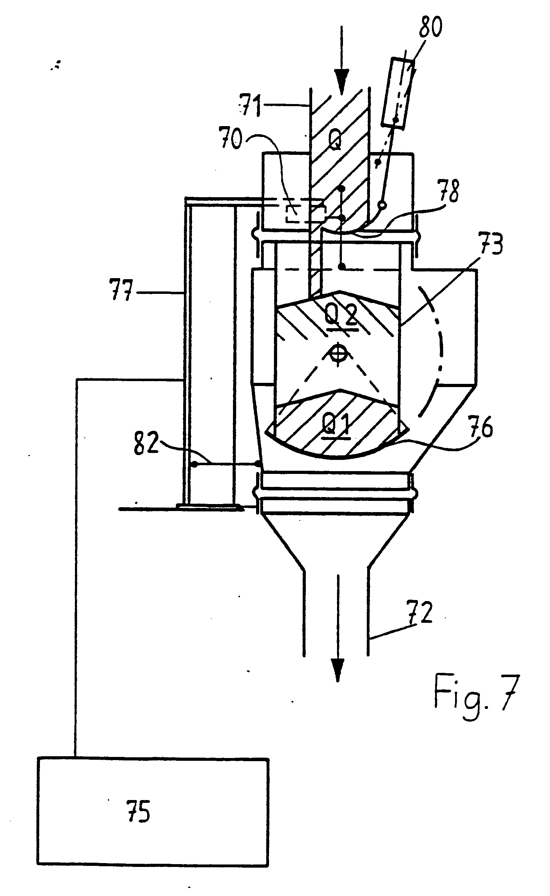

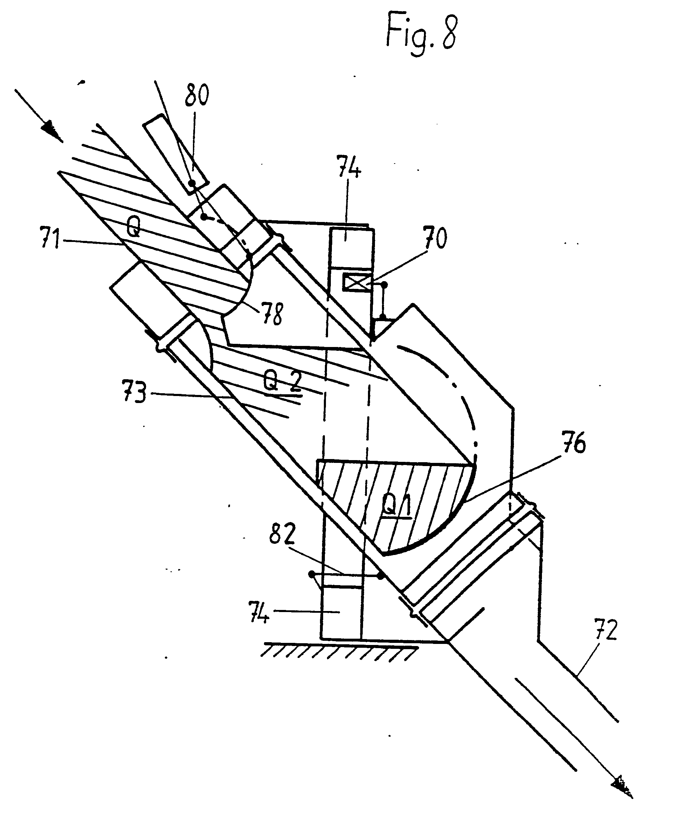

Die Darstellungen der Fig. 7 und 8 sollen nur prinzipiell eine erfindungsgemäß aufgebaute Vorrichtung im praktischen Einsatz sowohl in einer vertikal verlaufenden Transportleitung (Fig. 7), wie auch in einer schräg verlaufenden Transportleitung (Fig. 8) darstellen. Gleiche Bezugszeichen bedeuten in beiden Figuren gleiche Konstruktionselemente.

In Fig. 7 ist die Zuführleitung 71 zum Waagenbehälter 73 ebenso wie die Abführleitung 72 senkrecht verlaufend angeordnet, während in Fig. 8 eine schräg verlaufende Transportrichtung gegeben ist. Ihnen zwischengeschaltet ist die Waage, die in den Fig. 7 und 8 kein eigenes Bezugszeichen aufweist.

In der Zuführleitung 71 kommt der Produktstrom Q vor der Waage an. Das Ende der Zuführleitung 71 weist einen Regulierschieber 78 auf, der mittels eines Motors 80 in seiner Lage verstellt werden kann. Hierdurch ist es möglich, den in den Waagenbehälter 73 eintretenden Gutstrom nach Wunsch einzustellen.

Unten am Waagenbehälter 73 ist ein Abschlußschieber 76 vorgesehen, der neben seiner geschlossenen in den Fig. 7 und 8 voll ausgezeichneten Stellung jeweils in eine seitliche Öffnungsstellung (in den Fig. 7 und 8 strichpunktiert eingezeichnet) zur Freigabe des Waagenbehälters 73 verschwenkt werden kann, wonach dann das im Waagenbehälter 73 aufgehäufte Gut (Q 2) in die Abführleitung 72 abgelassen werden kann.

Der Waagenbehälter 73 ist in Fig. 7 über eine nur schematisch dargestellte Meßeinrichtung 70 gegenüber einem Haltegestell 77 aufgehängt, wobei über geeignet angeordnete Stabilisatoren 82 unerwünschte Bewegungen vermieden werden. Bei Anordnung gemäß Fig. 8 ist ein Ständer 74 vorgesehen, an dem wiederum das Gehäuse der Waage bzw. das Aufnahmegehäuse des Waagenbehälters 73 über eine geeignete Meßeinrichtung 70 befestigt ist. Auch hier sind Stabilisatoren 82 in geeigneter Form zur Stabilhaltung der Lage der Waage angeordnet. Als Meßeinrichtung 70 können alle geeigneten Meßeinrichtungen für eine rasche (elektronische) Erfassung der auftretenden Gewichtsunterschiede eingesetzt werden, z. B. eine Dehnmeßstreifen-Meßanordnung, wie sie aus den Fig. 5 und 6 entnehmbar ist.

Es versteht sich von selbst, daß die in den Fig. 7 und 8 nur im Prinzip dargestellten Anordnungen für eine erfindungsgemäße Vorrichtung mit einer geeigneten elektronischen Einrichtung zum Ausführen der für das erfindungsgemäße Verfahren erforderlichen Meßwertaufnahmeoperationen, Steuerungs- und Regeloperationen versehen sind. Eine solche Einrichtung ist nur in Fig. 7 rein prinzipiell mit 75 bezeichnet. Durch diese Einrichtung sollen, wie in Fig. 7 nicht im einzelnen dargestellt, alle erforderlichen Signale aufgenommen, verarbeitet und weitergeleitet werden können, weshalb insbesondere die Signalaufnahme vom Meßwertgeber 70, die Ansteuerung des Abschlußschiebers 76 sowie die Ansteuerung des Verstellmotors 80 von der Einrichtung 75 aus in geeigneter Form vorgenommen werden können.

Das in der Zuführleitung 71 angeförderte Produkt Q wird dann der Stellung des Regulierschiebers 78 entsprechend in den Waagenbehälter 73 eingelassen. Wenn dessen Abschlußschieber 76 geschlossen ist, fällt das Produkt auf den Abschlußschieber 76 und wird dort entsprechend dem Zustrom angehäuft. Sobald der Abschlußschieber 76 vollständig geschlossen ist, wird das von der Meßwerteinrichtung 70 laufend abgegebene elektrische Meßsignal, das ein Maß für das jeweils im Waagenbehälter 73 angehäufte Produktgewicht ist, an die Einrichtung 75 abgeleitet und von dieser über der Zeit erfaßt. Zu einem Zeitpunkt, der in Fig. 2 dem Zeitpunkt A entsprechen kann, befindet sich eine bestimmte Ausgangsmenge Q 1 im Waagenbehälter 73 angehäuft. Innerhalb eines kurzen Referenzzeitabschnittes Δt wird nun die Gewichtszunahme des Produktes innerhalb des Waagenbehälters 73 erfaßt, wobei am Ende des Meßzeitraumes die Produktmenge Q 2 im Waagenbehälter 73 enthalten sein soll (die tatsächliche relative Zunahme der Produktmengen Q 1 und Q 2 ist in den Fig. 7 und 8 erheblich verzerrt dargestellt, um eine bessere Übersichtlichkeit zu ermöglichen ; in Wirklichkeit sind die Niveauunterschiede relativ zueinander sehr viel kleiner). Dieser Vorgang kann sich dann ggf. noch mehrfach wiederholen, bis schließlich aufgrund eines Impulses durch die Einrichtung 75 der Abschlußschieber 76 in seine seitliche Öffnungsstellung gebracht wird, wonach das im Waagenbehälter 73 angehäufte Gut nach unten in die Abführleitung 72 abgegeben wird. Der Schieber 73 bleibt dabei über eine gewisse Zeit geöffnet, wobei in aller Regel eine vollständige Entleerung des Inhalts des Waagenbehälters 73 erfolgen kann. Die Öffnungs- und Schließdauer des Waagenbehälters 73 wird in geeigneter Form den den gegebenen Einsatzbedingungen entsprechenden Meßvorgaben vorgewählt. Dabei kann auch die Öffnungs- bzw. Schließgeschwindigkeit des Abschlußschiebers 76 unterschiedlich eingestellt oder vorgegeben werden.

**Patentansprüche**

1. Verfahren zur Erfassung des Durchsatzes eines Schüttgutstromes, der einer Waage zugeführt wird, deren Ausgang wiederholt gesperrt und freigegeben wird, dadurch gekennzeichnet, dass bei ununterbrochen zufliessendem Produkt von der Waage mindestens zwei Messwerte gebildet werden, die nach Sperren des Waagenausgangs um einen kurzen Referenzzeitabschnitt zueinander versetzt an der Waage abgenommen und elektronisch erfasst werden, wobei der Referenzzeitabschnitt mindestens um die Beruhigungsdauer dem Sperrzeitpunkt des Waagenausganges nachgeschaltet, insgesamt in dem Bereich des ungestörten Messwertanstieges der Waage liegend gewählt und aus den Messwerten eine Verhältniszahl für die Gewichtszunahme pro Zeiteinheit des Schüttgutes während einem Wägespiel errechnet wird.

2. Verfahren nach Anspruch 1, dadurch gekennzeichnet, dass die Dauer des Referenzzeitabschnittes im Bereich von 0,05-10 Sekunden gewählt wird.

3. Verfahren nach Anspruch 1, dadurch gekennzeichnet, dass die Dauer des Referenzzeitabschnittes im Bereich von 0,2-7 Sekunden gewählt wird.

4. Verfahren nach einem der Ansprüche 1 bis 3, dadurch gekennzeichnet, dass der Referenzzeitabschnitt im unteren oder mittleren Füllbereich des Waagebehälters nach Sperren des Waagenausganges gewählt wird.

5. Verfahren nach Anspruch 1 bis 4, dadurch gekennzeichnet, dass während des Referenzzeitabschnittes eine grosse Anzahl Messwerte von der Waage gebildet werden, die Gewichtszunahme direkt oder durch Integrierung gemittelt und die Gewichtszunahme pro Zeiteinheit während eines Wägespieles errechnet wird.

6. Verfahren nach Anspruch 3, dadurch gekennzeichnet, dass die Zeitdauer zwischen zwei aufeinanderfolgenden Wägespielen in Abhängigkeit der Konstanz des Schüttgutstromes frei wählbar ist.

7. Verfahren nach einem der Ansprüche 1 bis 6, dadurch gekennzeichnet, dass jeweils beim Anfahren des Schüttgutstromes oder beim Beginn des ersten Wägespieles der Waagenausgang gesperrt ist.

8. Verfahren nach einem der Ansprüche 1 bis 4, dadurch gekennzeichnet, dass eine grosse Anzahl Wägespiele in kurzen Zeitabständen durchgeführt wird, und statistisch die mittlere Gewichtszunahme pro Zeiteinheit oder die über die gesamte Zeit durchgeflossene Menge errechnet wird.

9. Verfahren nach Anspruch 6, dadurch gekennzeichnet, dass ein der geförderten Schüttgutmenge entsprechendes Steuersignal gebildet und zur Steuerung der Sperrvorrichtung am Waagenausgang eingesetzt wird.

10. Verfahren nach einem der Ansprüche 1 bis 4, dadurch gekennzeichnet, dass der errechnete Wert des Durchsatzes in ein Steuersignal umgesetzt und dieses als Istwert an eine Durchsatz-Regeleinrichtung im Produktzulauf angelegt wird, zur Regelung des Durchsatzes auf einen Sollwert.

11. Verfahren nach einem der Ansprüche 1 bis 5, dadurch gekennzeichnet, dass aus dem berechneten Durchsatz und einer ab dem Schliesszeitpunkt des Waagenausganges laufenden Zeitmessung die geförderte Schüttgutmenge kontinuierlich bestimmt wird und/oder auf einen vorbestimmten Wert begrenzt wird.

12. Vorrichtung zur Erfassung des Durchsatzes eines Schüttgutstromes, mit einer Waage (1), die eine Zuführung und eine Abführleitung für das Schüttgut aufweist, wobei der Waagenausgang an der Abführleitung gesperrt und freigegeben werden kann, zur Durchführung des Verfahrens nach einem der Ansprüche 1 bis 11, dadurch gekennzeichnet, dass die Waage (1) als elektronische Waage ausgebildet, eine steuerbare Schüttgut-Sperrvorrichtung (4) am Ausgang der Waage (1) angeordnet und eine Einrichtung zur wiederholten Ermittlung der Gewichtsanzeige bei ununterbrochen zufliessendem-Produkt des in die Waage (1) wirkenden Schüttgutes während eines kurzen Referenzzeitabschnittes bei geschlossener Stellung der Schüttgut-Sperrvorrichtung (4) vorgesehen ist.

13. Vorrichtung nach Anspruch 12, dadurch gekennzeichnet, dass die Waage (1) einen Verwägebehälter aufweist, der als Abschnitt der Förderleitung selbst ausgebildet ist.

14. Vorrichtung nach Anspruch 12, dadurch gekennzeichnet, daß die Waage (1) einen Verwägebehälter (6) aufweist, dessen Innenquerschnitt eine den Innenquerschnitt der Zuführleitung (2) oder der Abführleitung (3) entsprechende Querschnittsform aufweist.

15. Vorrichtung nach einem der Ansprüche 12 bis 14, dadurch gekennzeichnet, daß der Verwägebehälter (6) mit einem zylindrischen Durchlaufraum versehen ist, dessen Höhe 1,5 bis 5 mal seinem Durchmesser entspricht.

16. Vorrichtung nach einem der Ansprüche 12 bis 15, dadurch gekennzeichnet, daß der Abschlußschieber (4) über einen pneumatischen Zylinder (12) betätigbar ist, der seinerseits über einen elektro-pneumatischen Wandler (11) von einem Rechner (10) angesteuert wird.

17. Vorrichtung nach einem der Ansprüche 12 bis 16, dadurch gekennzeichnet, daß eine Dosiereinrichtung (18) in der Zuführleitung zur Waage (1) vorgesehen und mit einem Vorgabegerät (16) zur Einstellung einer vorwählbaren kontinuierlichen Durchsatzleistung verbunden ist.

18. Vorrichtung nach Anspruch 17, dadurch gekennzeichnet, daß ein Rechner (23) zur Ansteuerung des Vorgabegerätes (16) vorgesehen ist, der vom Ausgang der Einrichtung (5) zur Ermittlung des Durchsatzes des in der Waage (1) befindlichen Schüttgutes während eines Referenzzeitabschnittes angesteuert wird und Rechner (23), Vorgabegerät (16), Dosiereinrichtung (18) und Einrichtung (5) zur Ermittlung des Durchsatzes einer Durchsatzregeleinrichtung ausbilden.

19. Vorrichtung nach Anspruch 17 oder 18, dadurch gekennzeichnet, daß die Dosiereinrichtung (18) als Drehschieber oder als Dosierschnecke ausgebildet ist.

20. Vorrichtung nach einem der Ansprüche 12 bis 18, dadurch gekennzeichnet, daß der Raum (14) unmittelbar über und der Raum (15) unmittelbar unterhalb der Waage (1) über ein seitliches Druckausgleichsrohr (12) miteinander verbunden sind.

**Claims**

1. Method for measuring the mass flow of a fluent solid material which is fed to a weigher the output of which is repeatedly blocked and released, characterized in that, with the product flowing in uninterruptedly, at least two measurement values are formed by the weigher which, after blocking of the weigher outlet, are picked up at the weigher offset with respect to one another by a short reference time interval and electronically acquired, in which arrangement the reference time interval is selected to be delayed after the blocking time of the weigher outlet at least by the settling time, and overall to lie within the range of undisturbed measurement value rise of the weigher and from the measurement values a ratio number for the weight increase per unit time of the bulk material, during one weighing cycle is calculated.

2. Method according to Claim 1, characterized in that the duration of the reference time interval is selected from within the range from 0.05-10 seconds.

3. Method according to Claim 1, characterized in that the duration of the reference time interval is selected within the range from 0.2-7 seconds.

4. Method according to one of Claims 1 to 3, characterized in that the reference time interval is selected within the lower or central filling range of the weigher hopper after blocking of the weigher outlet.

5. Method according to Claim 1 to 4, characterized in that, during the reference time interval, a large number of measurement values are formed by the weigher, the weight increase is averaged directly or by integration and the weight increase per unit time during one weighing cycle is calculated.

6. Method according to Claim 3, characterized in that the duration of time between two successive weighing cycles is freely selectable as a function of the constancy of the flow of bulk material.

7. Method according to one of Claims 1 to 6, characterized in that the weigher outlet is blocked in each case during the starting of the flow of bulk material or at the beginning of the first weighing cycle.

8. Method according to one of Claims 1 to 4,

characterized in that a large number of weighing cycles is performed within short time intervals and the mean weight increase per unit time or the quantity which has flown through over the entire period is statistically calculated.

9. Method according to Claim 6, characterized in that a control signal corresponding to the quantity of bulk material conveyed is formed and used for controlling the blocking device at the weigher outlet.

10. Method according to one of Claims 1 to 4, characterized in that the calculated value of the mass flow is converted into a control signal and this is applied as actual value to a mass flow regulating device in the product feed, for controlling the mass flow to a nominal value.

11. Method according to one of Claims 1 to 5, characterized in that the quantity of bulk material conveyed is continuously determined, and/or limited to a predetermined value, from the calculated mass flow and a time measurement running from the closing time of the weigher outlet.

12. Device for measuring the mass flow of fluent solid material, comprising a weigher (1) which exhibits a feed and a discharge line for the bulk material, in which arrangement the weigher outlet can be blocked and released at the discharge line, for carrying out the method according to one of Claims 1 to 11, characterized in that the weigher (1) is constructed as electronic weigher, a controllable bulk material blocking device (4) is arranged at the outlet of the weigher (1) and a device is provided for the repeated determination of the weight indication with uninterruptedly supplied product of the bulk material acting into the weigher (1) during a brief reference time interval when the bulk material blocking device (4) is in the closed position.

13. Device according to Claim 12, characterized in that the weigher (1) exhibits a weighing hopper which is constructed as a section of the conveying line itself.

14. Device according to Claim 12, characterized in that the weigher (1) exhibits a weighing hopper (6) the internal cross section of which exhibits a cross sectional shape corresponding to the internal cross section of the feed line (2) or of the discharge line (3).

15. Device according to one of Claims 12 to 14, characterized in that the weighing hopper (6) is provided with a cylindrical passage space the height of which corresponds to 1.5 to 5 times its diameter.

16. Device according to one of Claims 12 to 15, characterized in that the shut-off slide valve (4) can be actuated via a pneumatic cylinder (12) which, in turn, is driven via an electro-pneumatic converter (11) by a computer (10).

17. Device according to one of Claims 12 to 16, characterized in that a metering device (18) is provided in the feed line to the weigher (1) and is connected to an input device (16) for adjusting a preselectable continuous mass flow capacity.

18. Device according to Claim 17, characterized in that a computer (23) for driving the input device (16) is provided which is driven by the output of the device (5) for determining the mass flow of the bulk material located in the weigher (1) during a reference time interval and computer (23), input device (16), metering device (18) and device (5) for determining the mass flow form a mass flow regulating device.

19. Device according to Claim 17 or 18, characterized in that the metering device (18) is constructed as rotary slide valve or as metering screw.

20. Device according to one of Claims 12 to 18, characterized in that the space (14) immediately above and the space (15) immediately below the weigher (1) are connected to one another via a lateral pressure equalizing tube (12).

**Revendications**

1. Procédé destiné à la saisie du débit d'un écoulement d'un produit en vrac qui est déversé dans une balance dont la sortie est fermée ou ouverte de façon répétitive, caractérisé par le fait que dans le cas d'un produit qui se déverse de façon ininterrompue, deux valeurs de mesure au moins sont créées par la balance, lesquelles sont captées et saisies électroniquement dans la balance, décalées l'une par rapport à l'autre après l'obturation de la sortie de la balance d'un court intervalle de temps, l'intervalle de temps de référence n'étant déclenché qu'après au moins un temps de stabilisation après le moment d'obturation de la sortie de la balance, et choisi dans son ensemble dans la zone dans laquelle la valeur de mesure établie par la balance augmente sans perturbation et qu'à partir des valeurs de mesure un nombre proportionnel est calculé pour représenter l'augmentation de poids par unité de temps d'un produit déversé en vrac au cours d'une pesée.

2. Procédé selon la revendication 1, caractérisé par le fait que la durée de l'intervalle de temps de référence est choisie dans la zone comprise entre 0,05 et 10 secondes.

3. Procédé selon la revendication 1, caractérisé par le fait que la durée de l'intervalle de temps de référence est choisie dans la zone comprise entre 0,2 et 7 secondes.

4. Procédé selon une des revendications 1 à 3, caractérisé par le fait que l'intervalle de temps de référence est choisi dans la zone de remplissage inférieur ou moyen du récipient de la balance après l'obturation de la sortie de la balance.

5. Procédé selon les revendications 1 à 4, caractérisé par le fait qu'au cours de l'intervalle de temps de référence un grand nombre de valeurs de mesure sont créées par la balance, une valeur de l'augmentation de poids est établie directement ou par intégration et l'augmentation de poids par unité de temps au cours d'une phase pesée est calculée.

6. Procédé selon la revendication 3, caractérisé par le fait que le temps s'écoulant entre deux phases successives de pesée peut être choisi librement en fonction de la constante d'écoulement du produit.

7. Procédé selon une des revendications 1 à 6, caractérisé par le fait que dans chaque cas au commencement de l'écoulement du produit en vrac ou au début de la première phase de pesée, la sortie de la balance est obturée.

8. Procédé selon une des revendications 1 à 4, caractérisé par le fait qu'un grand nombre de phases de pesées sont exécutées avec de courts écarts de temps et que l'augmentation de poids moyenne par unité de temps ou la quantité qui s'est écoulée pendant l'ensemble du temps est calculée statistiquement.

9. Procédé selon la revendication 6, caractérisé par le fait qu'un signal de commande correspondant à la quantité de produit en vrac déversé est créé et mis en œuvre pour commander le dispositif de fermeture de la sortie de la balance.

10. Procédé selon une des revendications 1 à 4, caractérisé par le fait que la valeur de débit calculée est transformée en un signal de commande et que ce dernier est délivré comme valeur effective à un dispositif de régulation de débit d'alimentation de produit, pour la régulation du débit à une valeur prescrite.

11. Procédé selon une des revendications 1 à 5, caractérisé par le fait que la quantité de produit en vrac déversée est déterminée en continu à partir du débit calculé et d'une mesure de temps débutant à partir du moment de l'obturation de la sortie de la balance, et/ou limitée à une valeur déterminée à l'avance.

12. Dispositif pour la saisie du débit d'un produit en vrac comportant une balance (1) qui présente un conduit d'amenée et un conduit d'évacuation pour le produit en vrac, la sortie de la balance sur le conduit d'évacuation peut être fermée et ouverte, pour l'exécution du procédé selon une des revendications 1 à 11, caractérisé par le fait que la balance (1) est du type électronique, qu'un dispositif commandable de fermeture (4) pour le produit en vrac est disposé à la sortie de la balance (1) et qu'on prévoit un dispositif destiné à établir de façon répétée l'indication du poids dans le cas d'une alimentation continue en produit en vrac agissant dans la balance (1), pendant un court intervalle de temps de référence, le dispositif de fermeture (4) pour le produit en vrac étant en position fermée.

13. Dispositif selon la revendication 12, caractérisé par le fait que la balance (1) présente un récipient de pesée qui est constitué en tant que partie du conduit d'alimentation.

14. Dispositif selon la revendication 12, caractérisé par le fait que la balance (1) présente un récipient de pesée (6) dont la section intérieure présente une forme correspondant à celle de la section intérieure du conduit d'amenée (2) ou du conduit d'évacuation (3).

15. Dispositif selon une des revendications 12 à 14, caractérisé par le fait que le récipient de pesée (6) comporte un espace de passage cylindrique dont la hauteur correspond à 1,5 à 5 fois son diamètre.

16. Dispositif selon une des revendications 12 à 15, caractérisé par le fait que le coulisseau de fermeture (4) peut être actionné par l'intermédiaire d'un cylindre pneumatique (12) qui est commandé de son côté par l'intermédiaire d'un convertisseur électro-pneumatique (11) grâce à un dispositif de calcul (10).

17. Dispositif selon une des revendications 12 à 16, caractérisé par le fait qu'une installation de dosage (18) est prévue dans le conduit d'amenée de la balance (1) et est reliée à un appareil (16) de distribution pour le réglage d'un débit continu que l'on peut choisir à l'avance.

18. Dispositif selon la revendication 17, caractérisé par le fait qu'un dispositif de calcul (23) destiné à commander l'appareil (16) de distribution est prévu, qu'il est commandé à partir de la sortie du dispositif (5) afin d'établir le débit du produit en vrac qui se trouve dans la balance (1) pendant un intervalle de temps de référence, que le dispositif de calcul (23), l'appareil de distribution (16), le dispositif de dosage (18) et le dispositif (5) sont conformés en vue de la détermination du débit d'un dispositif de réglage de débit.

19. Dispositif selon la revendication 17 ou 18, caractérisé par le fait que le dispositif de dosage (18) est constitué par un coulisseau tournant ou par une vis sans fin de dosage.

20. Dispositif selon une des revendications 12 à 18, caractérisé par le fait que le volume (14) situé immédiatement au-dessus de la balance (1) et le volume (15) situé immédiatement sous cette dernière sont reliés entre eux par un tuyau latéral (12) de compensation de pression.

Fig 1

Q in kg

Messzeit

Beruhigungszeit

Entleerung

freie Durchlaufzeit

Zykluszeit t 1

E

B'
A'
B
A

D

$\alpha$

I

II

$B_t$
$A_t$
$\Delta t'$
$\Delta t$

$B_{Gm}$
$A_{Gm}$

t in sek.

Fig.2

Fig 3

Fig. 4

Fig. 5

Fig. 6

5

Fig. 7

Fig. 8